# FASCICULE DE BREVET EUROPEEN

(11) **EP 3 740 389 B1**
(45) Date de publication et mention de la délivrance du brevet: **23.07.2025**
(21) Numéro de dépôt: 19701289.1
(22) Date de dépôt: 08.01.2019
(51) Int. Cl.: B60K 6/48, B60K 6/547, B60W 10/06, B60W 10/11, B60W 10/113, B60W 10/18, B60W 20/30, B60W 20/10, B60W 20/40, B60W 30/18, B60W 30/182, B60W 30/188, B60W 30/20

(54) **PROCEDE DE CONTROLE DU DEGAGEMENT DE COUPLEURS INTERNES DE PIGNONS DE VITESSE SUR DES ARBRES DE TRANSMISSION, TRANSMISSION ET GROUPE MOTOPROPULSEUR**
VERFAHREN ZUR STEUERUNG DER LÖSUNG VON INNENKUPPLERN VON ZAHNRÄDERN AUF GETRIEBEWELLEN, GETRIEBE UND ANTRIEBSSTRANG
METHOD FOR CONTROLLING THE RELEASE OF INTERNAL COUPLERS OF GEAR WHEELS ON TRANSMISSION SHAFTS, TRANSMISSION AND POWER TRAIN

(30) Priorité: 15.01.2018 FR 1850292
(43) Date de publication de la demande: 25.11.2020
(73) Titulaire: Renault s.a.s, 92100 Boulogne Billancourt (FR); Nissan Motor Co., Ltd., Yokohama-shi, Kanagawa 221-0023 (JP)
(72) Inventeur: CHANTREL, Cédric, 94220 Charenton Le Pont (FR); CHAMEROY, Adrien, 78960 Voisins-le-Bretonneux (FR); LE MAO, Loic, 92100 BOULOGNE-BILLANCOURT (FR)
(74) Mandataire: Renault Group
(86) Numéro de dépôt international: PCT/EP2019/050347
(87) Numéro de publication internationale: WO 2019/137917

(56) Documents cités:
- FR-A1- 2 804 384
- FR-A1- 3 018 486
- US-A1- 2010 203 996

## Description

La présente invention se rapporte au contrôle des groupes motopropulseurs de véhicules hybrides.

Plus précisément, elle a pour objet un procédé de contrôle du dégagement de la denture d'un coupleur interne de transmission, placé sous la commande d'un actionneur de passage, pour engager ou dégager un rapport de transmission du couple fourni par un moteur thermique relié à l'entrée de la transmission sans embrayage de coupure.

Elle a également pour objet une transmission et un groupe motopropulseur hybride, composé d'un moteur thermique relié sans embrayage de coupure à un premier arbre d'entrée de transmission, d'une machine électrique reliée à un deuxième arbre d'entrée de transmission, et d'au moins un coupleur à denture d'accouplement sur un pignon de vitesse placé sous la commande d'un actionneur de passage.

Dans la plupart des véhicules routiers, la transmission de l'énergie depuis le moteur vers la roue, se fait au travers d'une boîte de vitesses à configurations multiples.

Certains véhicules hybrides disposent de boîtes à crabots, ou « clabots », sans embrayage de coupure entre le moteur thermique et la boîte.

On connaît de la publication WO 2014/207332, une transmission hybride de ce type, disposant de plusieurs rapports électriques, thermiques et hybrides, où les couples du moteur thermique et d'au moins une machine électrique s'additionnent en direction des roues. Le couple d'origine thermique est transmis aux roues sur un rapport de transmission « *thermique* », et celle du couple de la machine électrique principale sur un rapport *« électrique ».*

On connait la publication FR 3 018 486 divulguant un procédé de contrôle du dégagement de la denture d'un coupleur interne de transmission.

On connait la publication US 2010203996 divulguant un procédé de contrôle de transmission sans embrayage de coupure à l'entrée de la transmission.

Les moteurs thermiques, ne peuvent pas fonctionner sous un certain régime. Dans les transmissions robotisées, ou automatisées, classiques, une demande de désaccouplement du moteur par rapport aux roues, est imposée à l'embrayage, lors de freinages risquant de faire caler le moteur. En l'absence d'embrayage de coupure à l'entrée de la transmission, un freinage peut placer le moteur dans des conditions ne lui permettant pas de fonctionner normalement, et éventuellement le faire caler.

Dans les groupes motopropulseurs (GMP) hybrides évoqués plus haut, l'engagement et le dégagement des crabots se fait au travers d'une stratégie impliquant à la fois le pilotage d'actionneurs internes de la transmission, et le pilotage des actionneurs de couple du véhicule (moteur à combustion interne et moteur électrique).

Pour assurer le décrabotage des pignons de boîte, il est nécessaire de réduire le couple résiduel au crabot en deçà d'un seuil déterminé, pendant une période de temps suffisante. En situation de freinage brutal, les actionneurs concernés n'ont pas toujours la capacité d'atteindre ces objectifs, avant que le moteur entre dans une plage de fonctionnement dégradée.

Lorsque le régime est dans une plage de régime trop faible pour pouvoir fonctionner normalement, le moteur à combustion interne provoque des explosions propres à générer du couple positif, et réguler le ralenti. Ces explosions provoquent des chocs et des vibrations, qui impactent tout le véhicule au travers de la chaîne cinématique. Elles sont ressenties très désagréablement par les usagers.

La présente invention a pour but de limiter les chocs et les vibrations transmises à la chaîne cinématique et au véhicule, par un fonctionnement dégradé du moteur thermique, ou par son calage.

Dans ce but, lorsque le moteur thermique entre dans une situation critique de risque de calage en décélération sur un rapport engagé :
- on détermine en fonction du régime du moteur thermique une première zone critique, dans laquelle on force l'actionneur à dégager le rapport pour empêcher le calage, et
- on détermine en fonction du régime moteur et de sa décélération, une deuxième zone critique, dans laquelle on pilote le calage du moteur en interdisant l'injection de carburant.

De préférence, la première zone critique est une zone dans laquelle l'actionneur a la capacité de dégager le rapport en fonction du couple résultant exercé par les parties tournantes de la transmission, sur les dents du coupleur.

De préférence, la deuxième zone critique est une zone dans laquelle l'actionneur n'a pas la capacité de dégager le rapport, en fonction du couple résultant exercé par les parties tournantes de la transmission sur les dents du coupleur.

Dans la transmission et le GMP hybride proposés, l'actionneur de passage et l'injection du moteur thermique, sont pilotés selon cette stratégie.

La présente invention sera mieux comprise à la lecture de la description suivante d'un mode de réalisation non limitatif de celle-ci, en se reportant aux dessins annexés, sur lesquels :
- la figure 1 représente schématiquement une architecture de GMP Hybride,
- la figue 2 montre les efforts en jeu sur un coupleur de boîte de vitesses à crabots
- la figure 3 illustre la stratégie proposée.

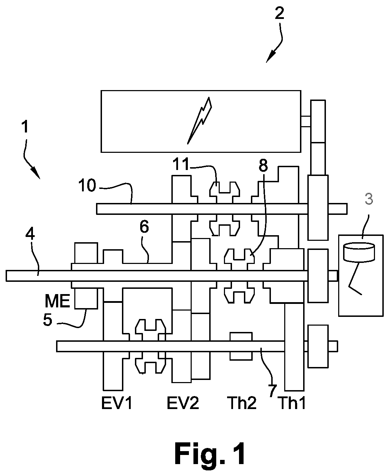

La boîte de vitesses 1 de la figure 1 est par exemple de type « robotisée ». Son fonctionnement est celui d'une boîte manuelle, mais les passages de vitesse sont automatisés. Sur le schéma, on a représenté une machine électrique, dite HSG (pour alterno-démarreur haute tension) 2, un moteur thermique 3 sur un arbre primaire plein 4. Une autre machine électrique 5 dite ME, plus puissante que la première, est montée sur un arbre primaire creux 6. L'arbre secondaire de la boîte 7 est relié au différentiel (non représenté), puis aux roues du véhicule.

Un premier coupleur à baladeur et crabots situé sur l'arbre secondaire 7 permet de modifier le rapport de la machine électrique ME 5, de façon indépendante du reste de la boîte pour disposer de deux rapports électriques EV1 et EV2. Le deuxième coupleur à baladeur et crabots 8, situé sur l'arbre primaire plein 4, permet de modifier le rapport du moteur thermique 3 séparément des rapports électriques, pour établir deux rapports thermiques Th2 et Th4, indépendants du rapport électrique. Le troisième coupleur à baladeur et crabots 11 situé sur l'arbre de transfert 10 permet d'établir un troisième rapport thermique Th3, lorsqu'il se déplace vers la droite sur le schéma. Il est possible de choisir de façon indépendante à chaque instant, le rapport voulu sur la première machine électrique ME et celui voulu sur le groupe moteur thermique Mth et la deuxième machine électrique HSG 2. Les combinaisons des rapports thermiques et des rapports électriques, permettent de réaliser des rapports hybrides.

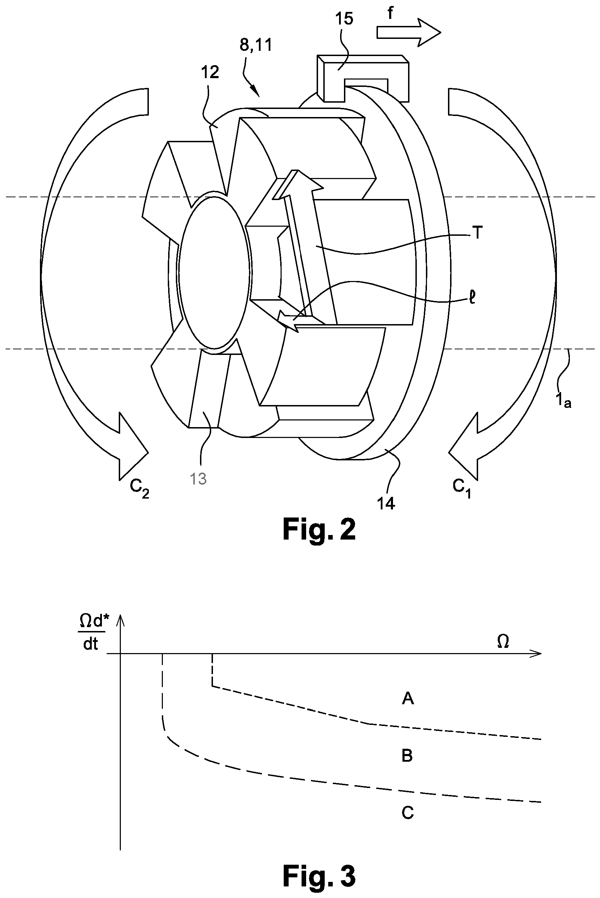

Sur la figure 2, on a représenté schématiquement un accouplement à dents, ou crabots droits, (appelés aussi clabots) de boîte de vitesses, comme les coupleurs 8 et 11 de la figure 1. Le coupleur 8, 11 présente des dents d'accouplement 12 solidaires d'un baladeur 14 lié en rotation à l'arbre 1a (en pointillés sur le schéma), et coulissant sur celui-ci sous la commande d'une fourchette 15 d'actionneur de passage (non représenté). Le déplacement axial du baladeur 14 détermine l'engagement ou le dégagement d'un rapport, par l'accouplement/désaccouplement de ses crabots 12 avec les crabots 13 d'un pignon de vitesse (non représenté) tournant sur l'arbre 1a. Le baladeur 14 est fixé en rotation sur l'arbre 1a. Son déplacement axial s'effectue sous l'action d'une fourchette 15, placée sous la commande d'un actionneur de passage . La flèche droite f traduit l'effort de l'actionneur pour désengager une vitesse. La flèche tournante C1 illustre le couple à l'arbre moteur imposé au baladeur. La flèche tournante C2 illustre le couple à l'arbre de transmission (non représenté) qui s'impose au pignon fou. L'effort résultant des couples C1 et C2 aux crabots du pignon fou a une composante tangentielle T, et une composante longitudinale, qui se traduit par un effort de frottement *l* entre les crabots 12 et 13. La force *l* s'oppose à l'effort de l'actionneur , et peut retarder ou ralentir le désengagement du rapport. Pour assurer le dégagement des crabots, l'actionneur exerce une force sur un baladeur 14 qui dispose d'un degré de liberté en glissière par rapport à l'arbre de transmission 1a.

Les actionneurs de boîte ont des capacités limitées, si bien qu'il est nécessaire de limiter au maximum la résultante des couples C1, C2, appliqués, ou mieux, de les annuler, pour assurer le dégagement des crabots dans les meilleures conditions. Toutefois, la réalisation des consignes de couple par les machines électriques et le moteur thermique du GMP, est elle-même limitée en amplitude par les performances propres de ces organes. Enfin, les contraintes d'agrément et leurs performances dynamiques, limitent également la réalisation des consignes de couple.

Dans ces conditions, il existe des situations où le désengagement des crabots ne peut pas se réaliser :
- dans certains cas, la résultante des couples ne diminue pas suffisamment pour autoriser le déplacement du baladeur,
- dans d'autres cas, la résultante des couples diminue suffisamment, mais la période pendant laquelle sa valeur autorise le déplacement du baladeur est trop courte, avant que le couple s'inverse et augmente à nouveau en sens opposé.

Le procédé de l'invention consiste à contrôler le dégagement de la denture du coupleur interne de transmission 8, 11, à placé sous la commande d'un actionneur de passage pour engager ou dégager un rapport de transmission du couple fourni par un moteur thermique relié à l'entrée de la transmission sans embrayage de coupure. La méthode proposée se base sur la détection d'une situation critique. La détection repose sur l'observation du régime moteur, et de sa dérivée. Sans sortir du cadre de l'invention, la détection d'une situation critique peut également se baser sur une alerte du système de freinage.

Lorsque le moteur thermique entre dans une situation critique de risque de calage en décélération sur un rapport engagé,
- on détermine en fonction du régime du moteur ω thermique une première zone critique, dans laquelle on force l'actionneur à dégager le rapport pour empêcher le calage, et
- on détermine en fonction du régime moteur et de sa décélération, une deuxième zone critique, dans laquelle on pilote le calage du moteur en interdisant l'injection de carburant.

La décélération du moteur peut être déterminée par la valeur de la dérivée de son régime (dω/dt), ou par le système de freinage du véhicule.

Le principe général est de détecter les deux zones critiques distinctes, en fonction de l'observation du régime moteur et de sa décélération :
- la première zone critique, où il existe un risque de calage et où le système a la capacité de dé craboter le moteur des roues, et
- la seconde zone critique, où il existe un risque de calage et où le système n'a pas la capacité de dé craboter le moteur des roues.

Dans la première zone, la réponse apportée est de forcer le décrabotage, en outrepassant la consigne générale d'état de la chaîne cinématique : dans cette zone l'actionneur a la capacité de dégager le rapport en fonction du couple résultant exercé par les parties tournantes de la transmission, sur les dents du coupleur.

Dans la seconde zone, cette réponse consiste à piloter le calage du moteur thermique en interdisant l'injection de carburant : dans cette zone, l'actionneur n'a pas la capacité de dégager le rapport, en fonction du couple résultant exercé par les parties tournantes de la transmission sur les dents du coupleur.

Dans le cas particulier d'un GMP hybride dépourvu d'embrayage de coupure en entrée de la transmission, tel que celui de la figure 1, la transmission regroupe le couple du moteur thermique et celui d'au moins une machine électrique sur plusieurs rapports de transmission distincts. L'invention prévoit dans ce cas l'activation de la double stratégie décrite : la première stratégie dite « *stratégie anti calage* », et la deuxième stratégie dite « *stratégie de calage* », selon les conditions rencontrées. Comme indiqué ci-dessus, les zones d'application de ces deux stratégies peuvent être déterminées par des plages de valeurs du régime du moteur ω, et de sa variation, en fonction du temps, de préférence filtrée. Selon l'illustration de la figure 3, on identifie ainsi trois zones de fonctionnement, en fonction du régime du moteur thermique ω, et de sa dérivée dω/dt :
- un première zone A, dite de fonctionnement nominale, ou *« mode nominal* », où aucune stratégie particulière n'est appliquée,
- une deuxième zone B, intermédiaire, d'activation de la *« stratégie anti-calage »,* et
- une troisième zone C, d'activation de la « *stratégie de calage* »*.*

La transmission proposée, illustrée par la figure 1, comporte au moins un coupleur interne 8, 11, placé sous la commande d'un actionneur de passage pour engager ou dégager un rapport de transmission du couple fourni par un moteur thermique relié à l'entrée de la transmission sans embrayage de coupure.

Conformément à l'invention, l'actionneur de passage et l'injection du moteur thermique, sont pilotés selon le procédé décrit ci-dessus.

Dans un mode de réalisation particulier, les coupleurs 8, 11 concernés sont à baladeur 14 et à crabots 12.

Le GMP hybride proposé et composé d'un moteur thermique relié sans embrayage de coupure à un premier arbre d'entrée de transmission 4, d'une machine électrique (ME) reliée à un deuxième arbre d'entrée de transmission et d'au moins un coupleur à denture d'accouplement 8, 11 sur un pignon de vitesse placé sous la commande d'un actionneur de passage. Conformément à l'invention, le moteur thermique et les actionneurs de coupleur, sont pilotés conformément au procédé décrit ci-dessus.

Un tel GMP Hybride peut comporter, outre un moteur thermique et une machine électrique principale ME, une machine électrique d'appoint HSG fournissant du couple sur les rapports thermiques. La stratégie décrite est alors applicable dans les conditions suivantes :
- un « *rapport thermique* » est engagé, c'est-à-dire que le moteur thermique est couplé mécaniquement aux roues sur un rapport de transmission, quel que soit son état, notamment lorsque la machine électrique d'appoint est utilisée compenser le trou de couple au cours du passage entre Z1 et Z2, lorsque le moteur thermique est coupé, et
- la dérivée du régime de la machine électrique d'appoint HSG, dω/dt est dans une première zone d'activation.

La « *stratégie de calage* » est applicable lorsque :
- un « *rapport thermique* » est engagé, c'est-à-dire que le moteur thermique est couplé mécaniquement aux roues sur un rapport de transmission, quel que soit l'état du moteur thermique, notamment lorsque la machine électrique d'appoint HSG utilisée compenser le trou de couple au cours du passage entre les deux rapports électriques, lorsque le moteur thermique est coupé, et
- la dérivée du régime de la machine électrique d'appoint HSG, dω/dt est dans une deuxième zone d'activation, où le système antiblocage des roues au freinage (ABS) est actif.

L'invention permet de limiter les chocs d'impacts sur la chaîne cinématique, qui peuvent impacter sa fiabilité, ainsi que les désagréments liés à ces chocs pour les passagers.

## Revendications

1. Procédé de contrôle d'un moteur thermique (3) et du dégagement de la denture d'un coupleur interne de transmission (8), placé sous la commande d'un actionneur de passage pour engager ou dégager un rapport de transmission du couple fourni par le moteur thermique relié à l'entrée de la transmission sans embrayage de coupure, dans lequel, lorsque le moteur thermique entre dans une situation critique de risque de calage en décélération sur un rapport engagé,
- on détermine en fonction du régime (ω) du moteur thermique (3) et de sa décélération une première zone critique, dans laquelle on force l'actionneur à dégager le rapport pour empêcher le calage, **caractérisé en ce que**, lorsque le moteur thermique entre dans ladite situation critique de risque de calage en décélération sur un rapport engégé :
- on détermine en fonction du régime du moteur (ω) thermique et de sa décélération, une deuxième zone critique, dans laquelle on pilote le calage du moteur en interdisant l'injection de carburant.

2. Procédé de contrôle selon la revendication 1 **caractérisé en ce que** la première zone critique est une zone dans laquelle l'actionneur a la capacité de dégager le rapport en fonction du couple résultant exercé par les parties tournantes de la transmission, sur les dents du coupleur.

3. Procédé de contrôle selon la revendication 1 ou 2 **caractérisé en ce que** la deuxième zone critique est une zone dans laquelle l'actionneur n'a pas la capacité de dégager le rapport, en fonction du couple résultant exercé par les parties tournantes de la transmission sur les dents du coupleur.

4. Procédé de contrôle selon la revendication 1, 2 ou 3, **caractérisé en ce que** la décélération du moteur est déterminée par la valeur de la dérivée de son régime (dω/dt).

5. Procédé de contrôle selon la revendication 1, 2 ou 3, **caractérisé en ce que** la décélération du moteur est déterminée par le système de freinage du véhicule.

6. Procédé de contrôle selon la revendication 4, **caractérisé en ce qu'**on identifie trois zones de fonctionnement, en fonction du régime du moteur thermique (ω), et de sa dérivée (dω/dt) :
- un première zone de fonctionnement nominal(A), où aucune stratégie particulière n'est appliquée,
- une deuxième zone de fonctionnement intermédiaire (B), d'activation d'une *stratégie anti-calage correspondant à la première zone critique,* et
- une troisième zone de fonctionnement (C) d'activation d'une *stratégie de calage, correspondant à la deuxième zone critique.*

## Patentansprüche

1. Verfahren zur Steuerung eines Verbrennungsmotors (3) und der Lösung der Verzahnung eines inneren Getriebekupplers (8), welche der Steuerung eines Gangschaltaktuators unterworfen ist, um ein Übersetzungsverhältnis des Drehmoments einzulegen oder herauszunehmen, das von dem Verbrennungsmotor geliefert wird, der mit dem Eingang des Getriebes ohne Trennkupplung verbunden ist, wobei, wenn der Verbrennungsmotor in eine kritische Situation mit Gefahr eines Abwürgens bei Verzögerung in einem eingelegten Gang eintritt,
- in Abhängigkeit von der Drehzahl (ω) des Verbrennungsmotors (3) und von seiner Verzögerung ein erster kritischer Bereich bestimmt wird, in dem der Aktuator gezwungen wird, den Gang herauszunehmen, um das Abwürgen zu verhindern, **dadurch gekennzeichnet, dass**, wenn der Verbrennungsmotor in die kritische Situation mit Gefahr eines Abwürgens bei Verzögerung in einem eingelegten Gang eintritt:
- in Abhängigkeit von der Drehzahl des Verbrennungsmotors (ω) und von seiner Verzögerung ein zweiter kritischer Bereich bestimmt wird, in dem das Abwürgen des Motors gesteuert wird, indem die Einspritzung von Kraftstoff verhindert wird.

2. Verfahren zur Steuerung nach Anspruch 1, **dadurch gekennzeichnet, dass** der erste kritische Bereich ein Bereich ist, in dem der Aktuator die Fähigkeit hat, den Gang in Abhängigkeit von dem resultierenden Drehmoment herauszunehmen, das von den rotierenden Teilen des Getriebes auf die Zähne des Kupplers ausgeübt wird.

3. Verfahren zur Steuerung nach Anspruch 1 oder 2, **dadurch gekennzeichnet, dass** der zweite kritische Bereich ein Bereich ist, in dem der Aktuator nicht die Fähigkeit hat, den Gang in Abhängigkeit von dem resultierenden Drehmoment herauszunehmen, das von den rotierenden Teilen des Getriebes auf die Zähne des Kupplers ausgeübt wird.

4. Verfahren zur Steuerung nach Anspruch 1, 2 oder 3, **dadurch gekennzeichnet, dass** die Verzögerung des Motors durch den Wert der Ableitung seiner Drehzahl (dω/dt) bestimmt wird.

5. Verfahren zur Steuerung nach Anspruch 1, 2 oder 3, **dadurch gekennzeichnet, dass** die Verzögerung des Motors durch das Bremssystem des Fahrzeugs bestimmt wird.

6. Verfahren zur Steuerung nach Anspruch 4, **dadurch gekennzeichnet, dass** in Abhängigkeit von der Drehzahl des Verbrennungsmotors (ω) und von deren Ableitung (dω/dt) drei Betriebsbereiche identifiziert werden:
- ein erster Nennbetriebsbereich (A), wo keine bestimmte Strategie angewendet wird,
- ein zweiter zwischenliegender Betriebsbereich (B) der Aktivierung einer *Strategie gegen das Abwürgen, die dem ersten kritischen Bereich entspricht,* und
- ein dritter Betriebsbereich (C) der Aktivierung einer *Strategie des Abwürgens, die dem zweiten kritischen Bereich entspricht.*

## Claims

1. Method for controlling a combustion engine (3) and the disengagement of the teeth of an internal transmission coupler (8), placed under the control of a gearshift actuator to engage or disengage a transmission ratio transmitting the torque supplied by the combustion engine connected to the input of the transmission without a decoupling clutch, wherein, when the combustion engine enters a critical situation in which there is a risk of stalling under deceleration in an engaged gear ratio,
- a first critical zone, in which the actuator is forced to disengage the gear ratio in order to prevent stalling, is determined as a function of the speed (ω) of the combustion engine (3) and of its deceleration, **characterized in that**, when the combustion engine enters said critical situation in which there is a risk of stalling under deceleration in an engaged gear ratio:
- a second critical zone, in which the stalling of the engine is managed by preventing the injection of fuel, is determined as a function of the speed (ω) of the combustion engine and of its deceleration.

2. Control method according to Claim 1, **characterized in that** the first critical zone is a zone in which the actuator has the ability to disengage the gear ratio as a function of the resultant torque exerted by the rotary parts of the transmission on the teeth of the coupler.

3. Control method according to Claim 1 or 2, **characterized in that** the second critical zone is a zone in which the actuator does not have the ability to disengage the gear ratio as a function of the resultant torque exerted by the rotary parts of the transmission on the teeth of the coupler.

4. Control method according to Claim 1, 2 or 3, **characterized in that** the deceleration of the engine is determined by the value of the derivative of its speed (dω/dt).

5. Control method according to Claim 1, 2 or 3, **characterized in that** the deceleration of the engine is determined by the braking system of the vehicle.

6. Control method according to Claim 4, **characterized in that** three operating zones are identified as a function of the speed (ω) of the combustion engine and of its derivative (dω/dt):
- a first nominal operating zone (A), in which no particular strategy is applied,
- a second intermediate operating zone (B) of activation of an anti-stall strategy corresponding to the first critical zone, and
- a third operating zone (C) of activation of a stall strategy, corresponding to the second critical zone.
